# EUROPÄISCHE PATENTSCHRIFT

(11) **EP 1 180 459 B1**
(45) Veröffentlichungstag und Bekanntmachung des Hinweises auf die Patenterteilung: **26.01.2005**
(21) Anmeldenummer: 01116178.3
(22) Anmeldetag: 04.07.2001
(51) Int. Cl.: B60S 1/52

(54) **Scheibenreinigungsanlage**
Vehicle window cleaning unit
Unité de lavage de vitres de véhicules

(30) Priorität: 17.08.2000 DE 10040298
(43) Veröffentlichungstag der Anmeldung: 20.02.2002
(73) Patentinhaber: Hella KGaA Hueck & Co., 59552 Lippstadt (DE)
(72) Erfinder: Chudaska, Andreas, 59597 Erwitte (DE)

(56) Entgegenhaltungen:
- DE-A- 4 401 744
- DE-U- 9 108 956
- PATENT ABSTRACTS OF JAPAN vol. 1998, no. 02, 30. Januar 1998 (1998-01-30) -& JP 09 277910 A (KOITO MFG CO LTD), 28. Oktober 1997 (1997-10-28)

## Beschreibung

Die Erfindung betrifft eine Scheibenreinigungsanlage insbesondere für Fahrzeugscheinwerfer mit einer eine Düse teleskopartig verstellbaren Stellvorrichtung, mit einem zylindrischen Gehäuse, mit einem im Inneren des Gehäuses angeordneten Kolben, welcher an seinem der Düse abgewandten Ende mit einem Deckel abgedeckt ist und mittels einer ringförmigen Abdichtung dicht an dem zylindrischen Gehäuse anliegt, mit einer im Inneren des Kolben angeordneten Ventildichtung eines Absperrventils und mit einer die Düse tragenden Kolbenstange mit einem Kolbenstangenkanal als Verbindung zur Düse, wobei die über die Kolbenstange mit dem Kolben verbundene Düse gegen den Druck einer Waschflüssigkeit von einer Ruhe- in eine Gebrauchsstellung bewegbar ist in der das Absperrventil den Waschmittelzufluss zur Düse freigibt.

Aus der DE 44 01 744 C2 ist eine Scheibenreinigungsanlage zum Waschen bzw. Reinigen einer Abschlussscheibe eines Scheinwerfers für Kraftfahrzeuge bekannt. Die Scheibenreinigungsanlage weist eine Stellvorrichtung auf, mit der eine Waschflüssigkeit ausstoßende Düse teleskopartig aus einer verdeckten Ruhestellung in eine Gebrauchsstellung bewegbar ist. Ein Kolben, der die Düse und ein Absperrventil aufweist, ist längsbeweglich in einem zylindrischen Gehäuse geführt und wird durch eine Feder in Richtung auf das Innere des Gehäuses gedrückt. Das Absperrventil wird durch eine weitere Feder, die eine höhere Vorspannung aufweist als die Feder zum Vorspannen des Kolbens, in eine Schließrichtung gespannt. Durch den Druck der Waschflüssigkeit wird der Kolben in seine Gebrauchsstellung gedrückt und das Absperrventil wird geöffnet, so dass die Waschflüssigkeit über einen Verbindungskanal in einen Kolbenstangenkanal zur Düse gelangen kann.

Durch die gewählte Flüssigkeitszuführung und die Umspülung der Ventildichtung mit Übergangskanälen verringerten Querschnittes zu beiden Seiten des Absperrventils ist die bekannte Scheibenreinigungsanlage hinsichtlich Ihrer Verbindung und ihres Aufbaues sehr aufwendig und teuer. Nachteilig bei der bekannten Scheibenreinigungsanlage ist zudem, dass sie zum einen aus einer Vielzahl von Bauteilen besteht und dass zum anderen die dem Absperrventil zugeordnete Feder von der Waschflüssigkeit umspült und damit einer verstärkten Korrosion ausgesetzt ist.

Weiterhin ist aus der DE-A-9 108 956 U eine Scheibenreinigungseinrichtung bekannt, die mit einer in einem zylindrischen Gehäuse teleskopartig verstellbaren Düseneinrichtung ausgestattet ist, wobei die Düse mittels Wasserdrucks von einer Ruhe- in eine Gebrauchstellung bewegbar ist, in der ein Absperventil den Waschmittelzufluss zur Düse freigibt. Eine Ventildichtung des Absperrventils ist mittels eines Deckels am Boden des zylindrischen Gehäuses fixiert und dichtet einen Zuflusskanal des Gehäuses ab. Der Zuflusskanal ist koaxial im Inneren des Kolbens angeordnet. Der Wasserzufluss ist seitlich zum die Ventildichtung umgebenden Ventilraum ausgerichtet. Eine Ventilfeder ist zwischen der Ventildichtung und dem Deckel außerhalb eines Wasserbereiches angeordnet.

Aufgabe der vorliegenden Erfindung ist es daher, die bekannte Scheibenreinigungsanlage so zu verbessern, dass sie kostengünstiger, d. h. durch die Verwendung einer geringeren Zahl von Bauteilen und durch einfacher ausgebildete Teile gefertigt werden kann.

Diese Aufgabe wird erfindungsgemäß mit dem Oberbegriff des Anspruches 1 dadurch gelöst, dass der Deckel die Ventildichtung im Inneren des Kolbens haltert, dass die Ventildichtung mit ihrem dem Deckel abgewandten Ende den Kolbenstangenkanal in der Ruhestellung gegenüber einem die Ventildichtung zum Kolbenstangenkanal umgebenden Ventilraum abdichtet und dass der Kolben zwischen seiner ringförmigen Abdichtung gegenüber dem Gehäuse und dem Deckel am Umfang zumindest einen Durchgangskanal zum Ventilraum aufweist.

Dadurch, dass der Deckel die Ventildichtung im Inneren des Kolbens haltert und dass die Ventildichtung in der Ruhestellung den Kolbenstangenkanal direkt abdichtet, kann die Kolbenstange durch Verzicht auf dem Absperrventil zur Düse hin vorgelagerte Zwischenkanäle einfacher gefertigt werden. Durch die Halterung der Ventildichtung durch den Deckel verringert sich zudem die Zahl der Bauteile. Dadurch, dass der Durchgangskanal zum Ventilraum seitlich am Umfang des Kolbens angeordnet ist, wird der Kolben druckseitig auf der Gesamtfläche des Deckels angeströmt und der Strömungsquerschnitt wird auf den Innendurchmesser des Kolbenstangenkanals reduziert. Dadurch lassen sich die Kräfteverhältnisse weiter optimieren.

Gemäß einer bevorzugten Ausführungsform der Erfindung ist die Ventildichtung in einem mit der Kolbenstange verbundenen Ventilkörper angeordnet. Durch die Anordnung der Ventildichtung in einem mit der Kolbenstange verbindbaren Ventilkörper ist eine einfache Herstellung und Montage des ventilseitigen Endes des Kolbens möglich. Grundsätzlich kann aber auch der Ventilkörper mit der Kolbenstange als ein Bauteil ausgeführt werden.

Gemäß einer weiteren bevorzugten Ausführungsform der Erfindung weist der Ventilkörper die ringförmige Abdichtung zum zylindrischen Gehäuse hin auf. Die ringförmige Abdichtung wird von einem gegen einen Ringanschlag auf einen Ansatz des Ventilkörpers aufsteckbaren Klemmring gebildet. Der Klemmring wird an seiner dem Ringanschlag abgewandten Seite von der Stirnfläche eines mit dem Deckel über Stege verbundenen Halteringes fixiert. Durch die Anordnung der ringförmigen Abdichtung an dem Ventilkörper ist die relativ lang ausgebildete Kolbenstange ohne außenliegenden Ansatz leicht zu fertigen. Der Klemmring und die Ventildichtung können zudem in einem Arbeitsgang fixiert werden.

Nach einer weiteren bevorzugten Ausführungsform der Erfindung weist die Ventildichtung an ihrem dem Deckel zugewandten Ende eine Ringmembran auf, deren äußerer Rand zur Düse hin auf einen Absatz des Ventilkörpers aufliegt und zum Deckel hin von einer ringförmigen Stirnfläche des Deckels abgedeckt und geklemmt wird. Der Deckel weist an seiner der Düse zugewandten Stirnseite eine Aufnahme für eine Ventilfeder auf, die in einer topfförmigen Aufnahme der dem Deckel zugewandten Rückseite der Ventildichtung mit einem ersten Ende angeordnet ist und deren zweites Ende sich auf dem Deckel abstützt.

Dadurch, dass die Ventildichtung über eine Ringmembran zwischen Ventilkörper und Deckel geklemmt wird, kommt die topfförmige Aufnahme der Ventildichtung bzw. die Ventilfeder nicht mit der Waschflüssigkeit in Verbindung. Durch die gewählte Ausbildung von Ventilkörper und Deckel können zudem der Klemmring der ringförmigen Abdichtung, die Ventildichtung und die Ventilfeder in einem Arbeitsgang montiert und fixiert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

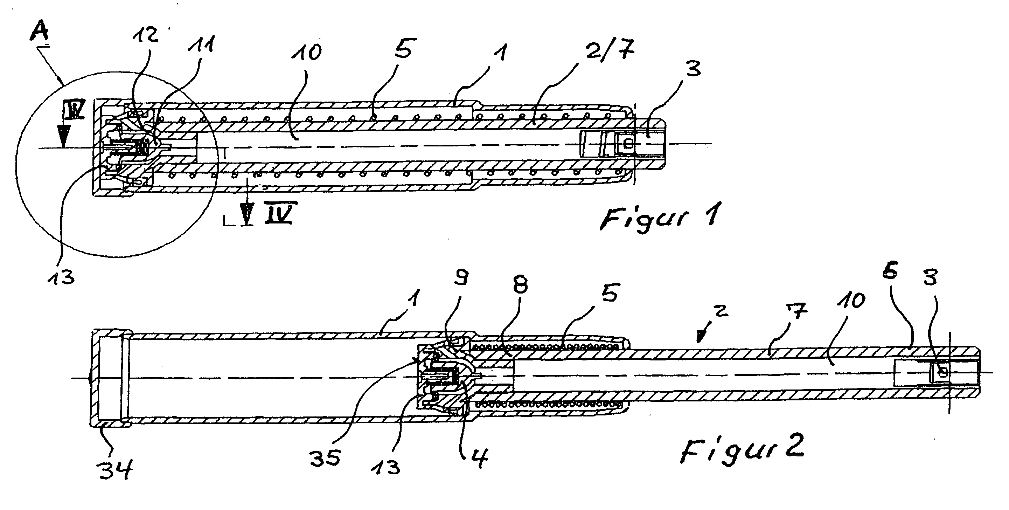

- Figur 1:: Eine Seitenansicht im Schnitt einer Scheibenreinigungsanlage in Ruhestellung,
- Figur 2:: eine Seitenansicht im Schnitt der Scheibenreinigungsanlage von Figur 1 in Gebrauchsstellung,

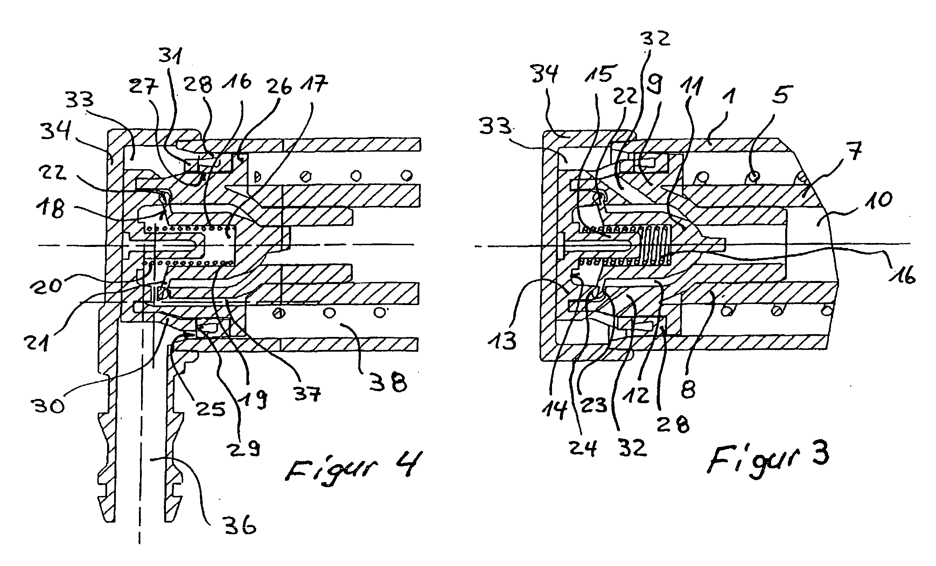

- Figur 3:: eine Seitenansicht im Schnitt der Einzelheit A der Scheibenreinigungsanlage von Figur 1 in vergrößerter Darstellung und
- Figur 4:: eine Seitenansicht der Scheibenreinigungsanlage von Figur 1 entlang der Linie IV - IV geschnitten in vergrößerter Darstellung.

Eine Scheibenreinigungsanlage besteht im Wesentlichen aus einem Gehäuse 1, einem Kolben 2, einer Düse 3, einem Absperrventil 4 und einer ersten Feder 5.

Der Kolben 2 ist längsverschieblich in dem zylindrischen Gehäuse 1 gelagert und teleskopartig mit einem freien ersten Ende 6 aus dem Gehäuse 1 ausfahrbar. Der Kolben besteht aus einer das erste Ende 6 aufweisenden Kolbenstange 7 an deren dem ersten Ende 6 abgewandten zweiten Ende 8 ein Ventilkörper 9 angeordnet ist. Im Inneren der Kolbenstange 7 erstreckt sich ein zentraler Kolbenstangenkanal 10 der mit der am ersten Ende 6 angeordneten Düse 3 verbunden ist.

Der am zweiten Ende 8 der Kolbenstange 7 angeordnete Ventilkörper 9 weist in seinem Inneren das Absperrventil 4 auf. Der Kolbenstangenkanal 10 setzt sich mit verringertem Durchmesser im Ventilkörper 9 fort. Eine Ventildichtung 11 des Absperrventils 4 dichtet in einer Ruhestellung den Kolbenstangenkanal 10 des Ventilkörpers 9 gegenüber einem die Ventildichtung 11 zum Kolbenstangenkanal 10 umgebenden Ventilraum 12 ab. Der Kolben 2 bzw. der Ventilkörper 9 wird zu seinem der Düse 3 abgewandten Ende von einem Deckel 13 verschlossen, der die Ventildichtung 11 haltert. Der Deckel 13 weist an seiner der Düse 3 bzw. dem Ventilkörper 9 zugewandten Innenseite 14 eine zylindrische Aufnahme 15 für eine Ventilfeder 16 auf, die in einer topfförmigen Aufnahme 17 der dem Deckel 13 zugewandten Rückseite 18 der Ventildichtung 11 mit einem ersten Ende 19 angeordnet ist und deren dem ersten Ende 19 gegenüberliegendes zweites Ende 20 sich auf den Deckel 13 abstützt. Die Ventildichtung 11 weist an ihrem dem Deckel 13 zugewandten Ende eine Ringmembran 21 auf, deren äußerer Rand 22 zur Düse 3 hin auf einem Absatz 23 des Ventilkörpers 9 aufliegt und zum Deckel 13 hin von einer ringförmigen Stirnfläche 24 des Dekkels 13 abgedeckt und geklemmt wird.

Der Ventilkörper 9 weist zum zylindrischen Gehäuse 1 hin eine ringförmige Abdichtung 25 auf. Die ringförmige Abdichtung 25 wird von einem gegen einen Ringanschlag 26 auf einen Ansatz 27 des Ventilkörpers 9 aufsteckbaren Klemmring 28 gebildet. Der Klemmring 28 wird an seiner dem Ringanschlag 26 abgewandten Seite von der Stirnfläche 29 eines mit dem Deckel 13 in einem Abstand über Stege 30 verbundenen Halterings 31 fixiert.

Der Ventilkörper 9 weist zwischen seiner ringförmigen Abdichtung 25 und dem Deckel 13 am Umfang zwei einander gegenüberliegende Durchgangskanäle 32 auf. Die Durchgangskanäle 32 verbinden den den Deckel 13 umgebenden mit Waschmittel beaufschlagten Waschmittelraum 33 mit dem Ventilraum 12. An seinem der Düse 3 abgewandten Ende ist das Gehäuse 1 von einer Kappe 34 verschlossen, gegen die in der Ruhestellung der Deckel 13 mit seiner Stirnfläche 35 anschlägt. Die Kappe 34 weist eine seitliche Zuleitung 36 auf, über die Waschmittel mittels einer nicht dargestellten Pumpe aus einem ebenfalls nicht dargestellten Waschmittelbehälter der Scheibenreinigungsanlage zuführbar ist.

Das Absperrventil 4 bzw. der von der Rückseite 18 der Ventildichtung 11 überspannte Raum des Deckels 13 wird über ein im Deckel 13 und Ventilkörper 9 angeordnetes Kanalsystem 37 in den von Kolbenstange 7 und Gehäuse 1 gebildeten Zwischenraum 38 entlüftet.
Zur Montage wird auf den Ansatz 27 des Ventilkörpers 9 der Klemmring 28 aufgesteckt. Auf die Aufnahme 15 des Deckels 13 wird die Ventilfeder 16 und über die Ventilfeder 16 wird die Ventildichtung 11 aufgesetzt und zusammen mit dem Deckel 13 in den Ventilkörper 9 platziert. Anschließend wird der Deckel 13 durch Laserschweißen stoffschlüssig mit dem Ventilkörper 9 verbunden. Der Ventilkörper 9 wird seinerseits nach Einsetzen der Feder 5 und der Kolbenstange 7 mit dem Gehäuse 1 verbunden. In Ruhestellung wird die Ventildichtung 11 von der Ventilfeder 16 dichtend gegen den Kolbenstangenkanal 10 gedrückt. Die Feder 5 drückt in der Ruhestellung den Kolben 2 mit seinem Deckel 13 bzw. der Stirnfläche 35 gegen die Kappe 34. Durch ansteigenden Druck des Waschmittels wird zunächst der Kolben 2 gegen die Feder 5 in seine Gebrauchsstellung ausgefahren und durch weiteren Anstieg des Waschmitteldrukkes wird die Ventildichtung 11 über die Durchgangskanäle 32 so mit Druck beaufschlagt, dass die Ventildichtung 11 den Kolbenstangenkanal 10 freigibt und das Waschmittel über die Durchgangskanäle 32 und den Kolbenstangenkanal 10 der Düse 3 zugeführt wird und aus dieser austreten kann.

## Patentansprüche

1. Scheibenreinigungsanlage insbesondere für Fahrzeugscheinwerfer mit einer eine Düse teleskopartig verstellbaren Stellvorrichtung, mit einem zylindrischen Gehäuse, mit einem im Inneren des Gehäuses angeordneten Kolben, welcher an seinem der Düse abgewandten Ende mit einem Deckel abgedeckt ist und mittels einer ringförmigen Abdichtung dicht an dem zylindrischen Gehäuse anliegt, mit einer im Inneren des Kolbens angeordneten Ventildichtung eines Absperrventils und mit einer die Düse tragenden Kolbenstange mit einem Kolbenstangenkanal als Verbindung zur Düse, wobei die über die Kolbenstange mit dem Kolben verbundene Düse gegen den Druck einer Waschflüssigkeit von einer Ruhe- in eine Gebrauchsstellung bewegbar ist in der das Absperrventil den Waschmittelzufluss zur Düse freigibt, **dadurch gekennzeichnet, dass** der Deckel (13) die Ventildichtung (11) im Inneren des Kolbens (2) haltert, dass die Ventildichtung (11) mit ihrem dem Deckel (13) abgewandten Ende den Kolbenstangenkanal (10) in der Ruhestellung gegenüber einem die Ventildichtung (11) zum Kolbenstangenkanal (10) umgebenden Ventilraum (12) abdichtet, und dass der Kolben (2) zwischen seiner ringförmigen Abdichtung (25) gegenüber dem Gehäuse (1) und dem Deckel (13) am Umfang zumindest einen Durchgangskanal (32) zum Ventilraum (12) aufweist.

2. Scheibenreinigungsanlage nach Anspruch 1, **dadurch gekennzeichnet, dass** die Ventildichtung (11) in einem mit der Kolbenstange (7) verbundenen Ventilkörper (9) angeordnet ist.

3. Scheibenreinigungsanlage nach Anspruch 2, **dadurch gekennzeichnet, dass** der Ventilkörper (9) die ringförmige Abdichtung (25) zum zylindrischen Gehäuse (1) hin aufweist.

4. Scheibenreinigungsanlage nach Anspruch 3, **dadurch gekennzeichnet, dass** die ringförmige Abdichtung (25) von einem gegen einen Ringanschlag (26) auf einen Ansatz (27) des Ventilkörpers (9) aufsteckbaren Klemmring (28) gebildet wird.

5. Scheibenreinigungsanlage nach Anspruch 4, **dadurch gekennzeichnet, dass** der Klemmring (28) an seiner dem Ringanschlag (26) abgewandten Seite von der Stirnfläche (29) eines mit dem Deckel (13) über Stege (30) verbundenen Halterings (31) fixiert wird.

6. Scheibenreinigungsanlage nach einem der Ansprüche 2 bis 5, **dadurch gekennzeichnet, dass** die Ventildichtung (11) an ihrem dem Deckel (13) zugewandten Ende eine Ringmembran (21) aufweist, deren äußerer Rand (22) zur Düse (3) hin auf einem Absatz (23) des Ventilkörpers (9) aufliegt und zum Deckel (13) hin von einer ringförmigen Stirnfläche (24) des Dekkels (13) abgedeckt und geklemmt wird.

7. Scheibenreinigungsanlage nach einem der Ansprüche 1 bis 6, **dadurch gekennzeichnet, dass** der Deckel (13) an seiner der Düse (3) zugewandten Innenseite (14) eine Aufnahme (15) für eine Ventilfeder (16) aufweist, die in einer topfförmigen Aufnahme (17) der dem Deckel (13) zugewandten Rückseite (18) der Ventildichtung (11) mit einem ersten Ende (19) angeordnet ist und deren zweites Ende (20) sich auf dem Deckel (13) abstützt.

8. Scheibenreinigungsanlage nach einem der Ansprüche 2 bis 7, **dadurch gekennzeichnet, dass** der mindestens eine Durchgangskanal (32) zum Ventilraum (12) am Ventilkörper (9) angeordnet ist.

9. Scheibenreinigungsanlage nach einem der Ansprüche 2 bis 8, **dadurch gekennzeichnet, dass** das Absperrventil (4) über ein in Ventilkörper (9) und Deckel (13) angeordnetes Kanalsystem entlüftbar ist.

## Claims

1. Pane cleaning unit, particularly for vehicle headlights with a telescopically movable adjustment device, of a nozzle, with a cylindrical housing, with a piston, that is covered on its end facing away from the nozzle by means of a cover member, disposed inside the housing, a piston concerned lying tight against the cylindrical housing by means of an annular seal, and with a valve seal, of a check valve, disposed on the inside of the piston, and also with a piston rod, carrying the nozzle, with a piston rod channel as a connection to the nozzle, whereby the nozzle that is connected with the piston by means of the piston rod can move from an idle into a used position, against the pressure of a cleaning liquid, in which the check valve releases the flow of cleaning agent to the nozzle, **characterized in that** the cover member (13) holds the valve seal (11) inside the piston (2), **in that** the valve seal (11) seals with its end, facing away from the cover member (13), the piston-rod channel (10), in its idle position, in relation to a valve space (12) surrounding the valve seal (11) for the piston-rod channel (10), and **in that** the piston (2) has, between its annular seal (25) opposite the housing (1) and the cover member (13), peripherally, at least one through channel (32) to the valve space (12).

2. Pane cleaning unit in accordance with claim 1, **characterized in that** the valve seal (11) is disposed in a valve body (9) that is connected to the piston rod (7).

3. Pane cleaning unit in accordance with claim 2, **characterized in that** the valve body (9) has, towards the cylindrical housing (1), the annular seal (25).

4. Pane cleaning unit in accordance with claim 3, **characterized in that** the annular seal (25) is formed by a locking ring (28) that can be placed, against a ring stop (26), on a shoulder (27) of the valve body (9).

5. Pane cleaning unit in accordance with claim 4, **characterized in that** the locking ring (28) is fixed, on its side facing away from the ring stop (26), by the end face (29) of a retainer ring (31) connected to the cover member (13) by means of fillets (30).

6. Pane cleaning unit in accordance with one of claims 2 to 5, **characterized in that** the valve seal (11) has an annular membrane (21), on its end that faces the cover member (13), the outer rim (22) of the said membrane lying, towards the nozzle (3), on a ledge (23) of the valve body (9) and, towards the cover member (13), being covered and clamped by an annular end face (24) of the cover member (13).

7. Pane cleaning unit in accordance with one of claims 1 to 6, **characterized in that** the cover member (13) has, on its inner side (14) facing the nozzle (3), an uptake means (15) for a valve spring (16), the said uptake means (15) being disposed, with one end (19), in a pan-form uptake means (17) of the rear side (18) of the valve seal (11) facing the cover member (13) and, with its other end (20), being supported on the cover member (13).

8. Pane cleaning unit in accordance with one of claims 2 to 7, **characterized in that** the at least one through channel (32) to the valve space (12) is disposed on the valve body (9).

9. Pane cleaning unit in accordance with one of claims 2 to 8, **characterized in that** the stop valve (4) can be ventilated by means of a channel system in the valve body (9) and the cover member (13).

## Revendications

1. Unité de lavage de vitres, en particulier pour phares de véhicules, comportant un dispositif de positionnement réglable de manière télescopique avec une buse, un boîtier cylindrique, un piston agencé à l'intérieur du boîtier, qui est recouvert par un couvercle à son extrémité détournée de la buse et qui est en appui étanche contre le boîtier cylindrique au moyen d'une étanchéité annulaire, comportant un joint de soupape d'une soupape d'arrêt, agencé à l'intérieur du piston, et comportant une tige de piston portant la buse avec un canal de tige de piston servant de communication avec la buse, la buse qui communique avec le piston via la tige de piston étant déplaçable à l'encontre de la pression d'un liquide de lavage depuis une position de repos jusque dans une position d'utilisation, dans laquelle la soupape d'arrêt libère l'amenée de produit de lavage vers la buse, **caractérisée en ce que** le couvercle (13) retient le joint de soupape (11) à l'intérieur du piston (2), **en ce que** le joint de soupape (11) étanchéifie avec son extrémité détournée du couvercle (13) le canal de tige de piston (10) dans la position de repos vis-à-vis d'une chambre de soupape (12) entourant le joint de soupape (11) vers le canal de tige de piston (10), et **en ce que** le piston (2) présente sur la périphérie au moins un canal de passage (32) vers la chambre de soupape (12) entre son étanchéité annulaire (25) vis-à-vis du boîtier (1) et le couvercle (13).

2. Unité de lavage de vitre selon la revendication 1, **caractérisée en ce que** le joint de soupape (11) est agencé dans un corps de soupape (9) relié à la tige de piston (7).

3. Unité de lavage de vitre selon la revendication 2, **caractérisée en ce que** le corps de soupape (9) présente l'étanchéité annulaire (25) vers le boîtier (1) cylindrique.

4. Unité de lavage de vitre selon la revendication 3, **caractérisée en ce que** l'étanchéité annulaire (25) est formée par une bague de serrage (28) enfichable sur un prolongement (27) du corps de soupape (9) contre une butée annulaire (26).

5. Unité de lavage de vitre selon la revendication 4, **caractérisée en ce que** la bague de serrage (27) est fixée, sur sa face détournée de la butée annulaire (26), par la surface frontale (29) d'une bague de retenue (31) reliée au couvercle (13) via des traverses (30).

6. Unité de lavage de vitre selon l'une des revendications 2 à 5, **caractérisée en ce que** le joint de soupape (11) présente sur son extrémité tournée vers le couvercle (13) une membrane annulaire (21) dont le bord (22) extérieur est en appui, vers la buse (3), sur un talon (23) du corps de soupape (9), et vers le couvercle (13), il est recouvert et serré par une face frontale annulaire (24) du couvercle (13).

7. Unité de lavage de vitre selon l'une des revendications 1 à 6, **caractérisée en ce que** le couvercle (13) présente sur sa face intérieure (14), tournée vers la buse (3), un logement (15) pour un ressort de soupape (16) qui est agencé avec une première extrémité (19) dans un logement (17) en forme de pot de la face postérieure (18) tournée vers le couvercle (13), du joint de soupape (11), et dont la deuxième extrémité (20) s'appuie sur le couvercle (13).

8. Unité de lavage de vitre selon l'une des revendications 2 à 7, **caractérisé en ce que** ledit au moins un canal de passage (32) est agencé sur le corps de soupape (9) vers la chambre de soupape (12).

9. Unité de lavage de vitre selon l'une des revendications 2 à 8, **caractérisée en ce que** la soupape d'arrêt (4) peut être mise à l'air via un système à canal agencé dans le corps de soupape (9) et dans le couvercle (13).
